# EUROPÄISCHE PATENTSCHRIFT

(11) **EP 4 248 008 B1**
(45) Veröffentlichungstag und Bekanntmachung des Hinweises auf die Patenterteilung: **22.05.2024**
(21) Anmeldenummer: 21811041.9
(22) Anmeldetag: 16.11.2021
(51) Int. Cl.: D04B 1/04

(54) **EDELMETALLNETZ FÜR DIE KATALYSIERUNG VON GASPHASENREAKTIONEN, SEIN HERSTELLUNGSVERFAHREN UND SEINE VERWENDUNG IN EINEM AMMONIAK OXIDATIONSVERFAHREN**
PRECIOUS METAL NET FOR CATALYSING GAS PHASE REACTIONS, METHOD OF MAKING SAME AND ITS USE IN AN AMMONIA OXIDATION PROCESS
FILET MÉTALLIQUE PRÉCIEUX POUR LA CATALYSE DES RÉACTIONS EN PHASE GAZEUSE, LE PROCÉDÉ POUR SA RÉALISATION ET SON USAGE DANS UN PROCÉDÉ DE L'OXIDATION DE L'AMMONIAQUE

(30) Priorität: 17.11.2020 EP 20000415
(43) Veröffentlichungstag der Anmeldung: 27.09.2023
(73) Patentinhaber: Umicore AG & Co. KG, 63457 Hanau-Wolfgang (DE)
(72) Erfinder: BORN, Dirk, 63505 Langenselbold (DE); PRASCH, Dieter, 36396 Steinau (DE); VOTSMEIER, Martin, 69469 Weinheim (DE); WISER, Artur, 60486 Frankfurt (DE)
(86) Internationale Anmeldenummer: PCT/EP2021/081806
(87) Internationale Veröffentlichungsnummer: WO 2022/106396

(56) Entgegenhaltungen:
- EP-A1- 0 364 153
- WO-A1-2014/099592
- US-A- 4 322 232

## Beschreibung

Die Erfindung betrifft gestrickte Edelmetallnetze mit neuer Strickstruktur für die katalytische Oxidation von Ammoniak, insbesondere für die Oxidation zu NO, wie sie für die Salpetersäureproduktion verwendet wird.

Edelmetallkatalysierte Gasreaktionen wie die Oxidation von Ammoniak mit Luftsauerstoff in der Salpetersäureproduktion (Ostwald-Verfahren) oder die Umsetzung von Ammoniak mit Methan in Anwesenheit von Sauerstoff zu Blausäure (Andrussow-Verfahren) haben seit langem erhebliche industrielle Bedeutung erlangt, werden durch sie doch im großtechnischen Maßstab Basischemikalien für die chemische Industrie und für die Düngemittelproduktion bereitgestellt (Andreas Jess, Peter Wasserscheid: Chemical Technology; Wiley-VCH Verlag, Weinheim 2013, Kapitel 6.4.)

Kern dieser heterogen katalysierten Gasreaktionen sind Edelmetallkatalysatoren in Form gasdurchlässiger räumlicher Gebilde, an bzw. in denen die Reaktion abläuft. Hierbei haben sich seit geraumer Zeit Netze in Form von Geweben (DE4028916 C2) oder Gestricken (EP0364153 B1, DE4206199 C1) aus feinen Edelmetalldrähten durchgesetzt.

Das Verstricken von Metalldraht ist bekannt: US4322232 offenbart einen Filtersack, in welches ein leitfähiger Faden eingestrickt ist, um statische Aufladung in Filtersäcken zu verhindern. Dieser leitfähige Faden kann z.B. aus synthetischem Faden unter Beimischung von metallischen Fasern hergestellt werden.

WO2014/099592A1 offenbart die Herstellung von Blausäure mithilfe des Andrussov-Verfahrens, wobei das hierfür verwendete gestrickte Katalysatornetz von einem gewellten, gasdurchlässigen Träger getragen wird, welcher durch seine Form das Brechen des Katalysatornetzes reduziert oder sogar vollständig verhindert. Für dieses Verfahren wird ein Platingehalt des Netzes von 90 Gew.-% angestrebt, was die Netzbruchgefahr erhöht.

Die Katalysatornetze werden dabei üblicherweise in einem Strömungsreaktor in einer Ebene senkrecht zur Strömungsrichtung des Gasgemisches angeordnet. Auch kegelförmige Anordnungen sind bekannt. Es werden zweckmäßigerweise mehrere Netze hintereinander angeordnet und zu einem Netzstapel zusammengefasst.

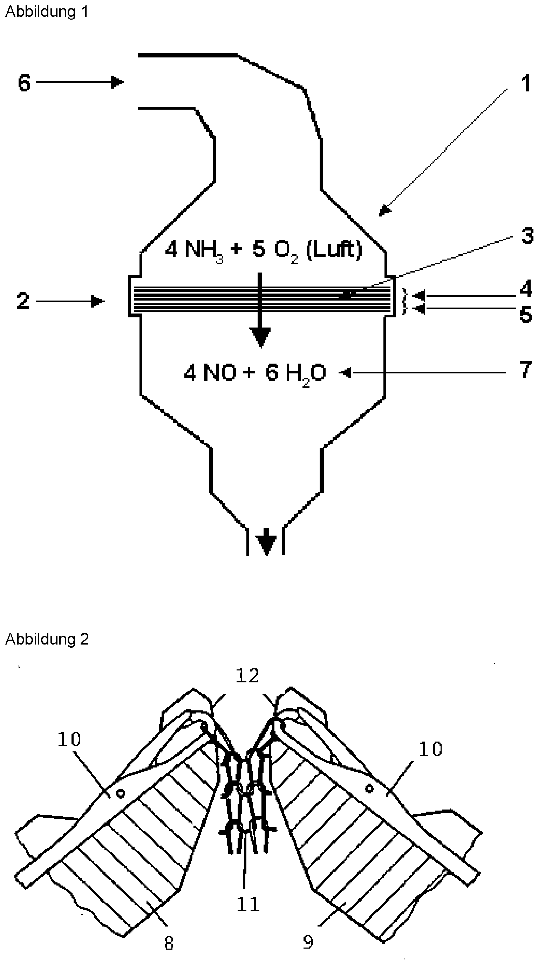

Abbildung 1 zeigt am Beispiel der katalytischen Ammoniakoxidation (Ostwald-Verfahren) schematisch den Reaktor mit dem darin verbauten Netzstapel, dessen Funktion im Folgenden beschrieben wird:
In der Reaktionszone (2) des Strömungsreaktors (1) ist in einer Ebene senkrecht zur Strömungsrichtung der Netzstapel (3), der aus mehreren hintereinander liegenden Katalysatornetzen (4) und nachgeschalteten Trenn- und Getternetzen (5) besteht, angeordnet. Dieser Netzstapel wird durch Einklemmen in seiner Position gehalten.

Das Reaktionsgas (Ammoniak-Luftsauerstoffgemisch mit einem Ammoniakgehalt von 9 - 13 Vol.-%) (6) durchströmt unter atmosphärischem oder erhöhtem Druck den Netzstapel (3), wobei im Eintrittsbereich die Zündung des Gasgemisches erfolgt und die Verbrennungsreaktion zu Stickstoffmonoxid (NO) und Wasser (7) die gesamte Reaktionszone (2) erfasst:

4 NH₃ + 5 O₂ (Luft) → 4 NO + 6 H₂O

Unerwünschte Nebenreaktionen sind die Oxidation des Ammoniaks zu Stickstoff und Lachgas (N₂O), wobei ersteres lediglich die Ausbeute an NO verringert, letzteres jedoch zudem ein starkes Treibhausgas darstellt:

4 NH₃ + 3 O₂ (Luft) → 2 N₂ + 6 H₂O

4 NH₃ + 4 O₂ (Luft) → 2 N₂O + 6 H₂O

Das NO im abströmenden Reaktionsgasgemisch reagiert in der Folge mit dem überschüssigen Luftsauerstoff zu NO₂:

2 NO + O₂ → 2 NO₂

Eine unerwünschte Nebenreaktion hierbei ist die Bildung von Lachgas:

2 NO + ½ O₂ → 2 N₂O

Das NO₂ reagiert wiederum in einer nachgeschalteten Absorption mit Wasser zu Salpetersäure, welche etwa der Düngemittelproduktion zugeführt wird:

3 NO₂ + H₂O → 2 HNO₃ + NO

Für die Herstellung der Edelmetallnetze werden Edelmetalldrähte aus Platin, Rhodium oder aus Legierungen dieser Metalle mit anderen Edel- oder Unedelmetallen verwendet. Typisch sind hierbei Platin-Rhodium- oder Platin-Palladium-Rhodium-Legierungen mit 88 bis 97 Gew.-% Platin. Platin ist erforderlich, um einen möglichst hohen Ammoniak-Umsatz zu erzielen, Rhodium verbessert die Selektivität zu NO, reduziert dadurch die Emission von Lachgas, und erhöht die mechanische Festigkeit [G. R. Maxwell: "Synthetic Nitrogen Products - A Practical Guide to the Products and Processes", Springer Science + Business Media, Inc. 2005, Seite 220]. Palladium wiederum wird verwendet, um, abhängig von den Edelmetallpreisen, die Edelmetallkosten durch Ersatz von Platin zu senken.

Für das Stricken von Edelmetallnetzen werden Flachstrickmaschinen verwendet. Der Aufbau der Flachstrickmaschine wird in Abbildung 2 verdeutlicht. Die Flachstrickmaschine besitzt ein vorderes (8) und ein hinteres Nadelbett (9), in welche die Zungennadeln (10) verbaut sind. Die Zungennadeln durchlaufen je nach Programmierung der Maschine unterschiedliche Stellungen. Die Programmierung gibt demnach die Struktur des Gestricks vor. Eine Besonderheit der Flachstrickmaschine gegenüber anderen gewebebildenden Maschinen ist, dass man synchron auf dem vorderen als auch auf dem hinteren Nadelbett unabhängig voneinander Gestricke bilden kann (Einbettware). Darüber hinaus können Abstandsgestricke (Zweibettware) gebildet werden, bei denen der Faden im Wechsel vorne und hinten Maschen oder Fang bildet (EP1358010 B2). Das Gestrick wird nach unten zwischen den beiden Nadelbetten abgestrickt (11). Dies geschieht durch sukzessives Abschlagen der einzelnen geformten Maschen über die Abschlagsstellung und Abschlagstegkante (12).

Gestrickte Edelmetallnetze besitzen gegenüber gewebten Edelmetallnetzen eine Reihe von Vorteilen, weswegen sie heute im industriellen Einsatz bevorzugt werden. Zum einen bietet die Stricktechnik die Möglichkeit einer hohen Flexibilität in Hinblick auf Strickmuster, verwendete Drahtstärken und resultierendes Flächengewicht. Zum anderen lassen sich die Edelmetallgestricke ökonomischer herstellen, da bei der Stricktechnik kürzere Rüstzeiten als bei der Webtechnik anfallen. Dies bedingt insbesondere eine erheblich reduzierte Edelmetallbindung in der Produktion. Zudem können auf Flachstrickmaschinen Edelmetallnetze beliebiger Länge hergestellt werden.

Im Folgenden werden die wesentlichen Begriffe definiert:
Als *Edelmetall* sollen Gold, Silber, sowie die Platinmetalle (Ru, Rh, Pd, Os, Ir, Pt) gelten.

Als *Katalysatornetze* werden die Netze bezeichnet, deren katalytische Aktivität für die Umsetzung von Ammoniak mit Sauerstoff genutzt wird.

Als *Getternetze* werden die Netze bezeichnet, die im Reaktionsgasfluß ausgangsseitig zu den Katalysatornetzen eingebaut sind, um volatiles Platinoxid zwecks Recycling durch Legierungsbildung mit dem Palladium der Getternetze einzufangen und damit den Platinverlust zu minimieren.

Als *Edelmetallnetze* wird die Gesamtheit der Katalysator- und Getternetze bezeichnet.

Als *Trennnetze* werden Netze aus hochtemperaturstabilem Stahl bezeichnet, welche zwischen den Getternetzen und / oder zwischen dem Katalysatornetzstapel und dem angrenzenden ersten Getternetz verbaut werden, um ein Zusammensintern der betreffenden Edelmetallnetze zu verhindern.

Der *Netzstapel* besteht aus den Katalysatornetzen auf der Einlaßseite des Netzstapels, und optional den Getternetzen auf der Auslaßseite des Netzstapels, sowie den Trennnetzen, die ggf. zwischen den Edelmetallnetzen verbaut werden.

Als *Strömungsreaktorwird* der Reaktor bezeichnet, der dafür sorgt, dass das Reaktionsgas über den in ihm verbauten Netzstapel geleitet wird.

Über die *Zungennadeln* wird der Strickprozeß durchgeführt. Für jedes Maschenstäbchen eines Gestricks wird eine Zungennadel benötigt.

Nadelbett, Einbettware, Zweibettware, Polfaden: Das *Nadelbett* ist das Element der Flachstrickmaschine, über das die Zungennadeln geführt werden. Die Flachstrickmaschine verfügt üblicherweise über ein vorderes und ein hinteres Nadelbett, auf welchem jeweils ein Gestrick gestrickt werden kann (*Einbettware*). Werden diese beiden Gestricke während des Strickvorgangs über *Polfäden* zusammengestrickt, ist das neu entstehende Gestrick eine *Zweibettware.*

Ein *Henkel* entsteht durch eine Verbindung von zwei Schleifen. *Fang* ist ein Henkel, der bei einer R/R-Bindung von einem Nadelbett zum gegenüberliegenden Nadelbett eingelegt wird. Die Begriffe 'Henkel', 'Schleife' und 'R/R-Bindung' sind dem Fachmann bekannt.

Maschenreihe und -stäbchen: Die nacheinander durch den gleichen Faden gebildeten Maschen werden in ihrer Gesamtheit als *Maschenreihe* bezeichnet. Die parallel verlaufenden Maschenreihen werden durch Verschlingung der Maschen eines *Maschenstäbchens* zusammengehalten.

Als *Gestrickebene* soll die Ebene bezeichnet werden, welche aus den Maschenreihen und -stäbchen des auf dem vorderen oder hinteren Nadelbetts gebildeten Gestricks gebildet wird.

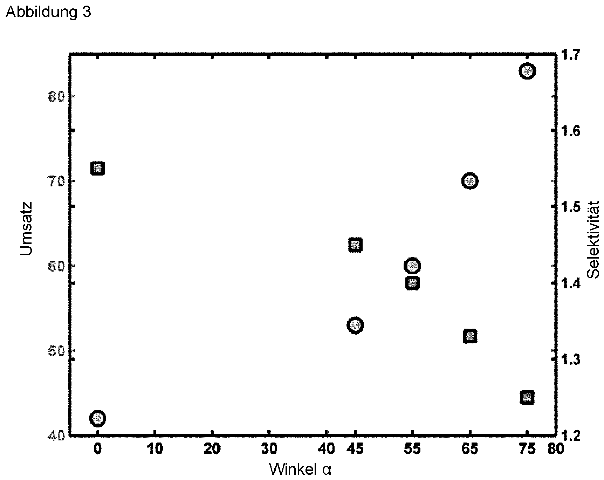

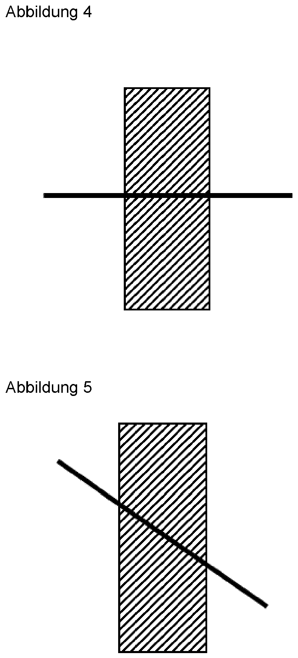

Üblicherweise werden im Strömungsreaktor (1) die Katalysatornetze (3) senkrecht zur Strömungsrichtung des Reaktionsgasgemisches eingebaut. Die Erfinder haben festgestellt, dass der Anströmwinkel, mit dem das Reaktionsgasgemisch auf den Edelmetalldraht auftrifft, einen Einfluss auf die Selektivität zu N₂O hat. Computersimulationsberechnungen bestätigten dies. Abbildung 3 zeigt die Computersimulation der Ammoniakoxidation über einen Edelmetalldraht (angenommene Zusammensetzung PtRh5) unterschiedlicher Ausrichtung bei konstanter Breite des durchströmten Bereiches. Dabei ist auf der Abszissenachse die Abweichung von der senkrechten Anströmung des Drahtes als Winkel α dargestellt. Ein Winkel α von 0° entspricht somit einem Draht innerhalb der Ebene senkrecht zur Strömungsrichtung des Reaktionsgases (Abbildung 4) entsprechend der Ausrichtung der Katalysatornetze (3) im Strömungsreaktor (1). Abbildung 5 zeigt einen Draht, der im Winkel α = 35° gekippt in der Reaktionszone vorliegt. Auf der linken Ordinatenachse ist der Ammoniakumsatz (Symbol: Kreise), und auf der rechten Ordinatenachse die Selektivität zu N₂O (Symbol: Quadrate) aufgetragen. Wie zu erkennen ist, nimmt mit zunehmendem Winkel α der Ammoniakumsatz zu und die Selektivität zu N₂O ab. Je schräger der Draht angeströmt wird, desto höher sind der Umsatz von Ammoniak und desto geringer ist die Selektivität für die Oxidation von Ammoniak zu N₂O. Der zunehmende Ammoniakumsatz ist mit der längeren Drahtlänge und damit größeren Oberfläche innerhalb des durchströmten Bereiches zu begründen. Die geringere Selektivität für die Oxidation von Ammoniak zu N₂O ist jedoch überraschend.

Der vorliegenden Erfindung lag daher die Aufgabenstellung zugrunde, ein Verfahren zu entwickeln, mit dem sich ein Edelmetallnetz herstellen lässt, welches aufgrund seiner Struktur eine höhere Selektivität für die Oxidation von Ammoniak zu NO aufweist.

Die Aufgabe wurde gelöst durch ein Verfahren zur Herstellung von Edelmetallnetzen auf Flachstrickmaschinen, die Schritte enthaltend
a. Bereitstellen von Edelmetalldraht, Platin umfassend
b. Bereitstellen von brennbarem oder in Lösungsmittel löslichem Garn
c. Stricken von Zweibettware durch simultanes Stricken auf dem vorderen (8) und hinteren (9) Nadelbett
wobei
die beiden Gestricke durch verbindende Polfäden zusammengeführt werden und auf dem vorderen (8) oder auf dem hinteren (9) Nadelbett ein brennbares oder lösliches Garn verwendet wird, welches nach dem Strickvorgang abgeflammt oder aufgelöst wird, und wobei
auf dem anderen Nadelbett und für die Polfäden ein Edelmetalldraht verwendet wird, so dass nach dem Abflammen oder Auflösen des brennbaren oder löslichen Garns nur der Polfaden oder die Polfäden und das auf dem hinteren (9) oder vorderen (8) Nadelbett hergestellte Gestrick aus Edelmetalldraht übrig bleiben, so dass das Gestrick von der Netzebene abstehende Schlaufen aufweist, die von dem Polfaden oder den Polfäden gebildet werden.

Durch die Entfernung des Gestricks, welches auf dem hinteren oder vorderen Nadelbett hergestellt wurde, entsteht ein Edelmetallnetz mit von der Netzebene abstehenden Schlaufen. Durch den Edelmetalldrahtanteil in den Schlaufen wird, wie bereits beschrieben, die Selektivität für die Oxidation von Ammoniak zu N₂O verringert.

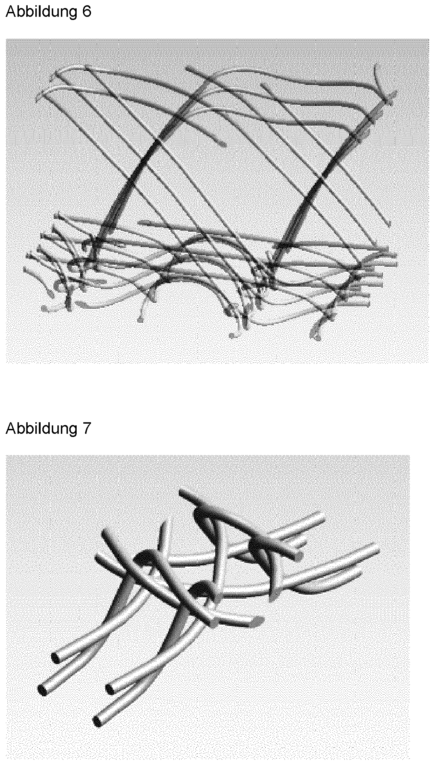

Durch das Merkmal der abstehenden Schlaufen ist auch nach Abschluss der Herstellung das erfindungsgemäße Edelmetallnetz von einem Edelmetallnetz entsprechend dem Stand der Technik zu unterscheiden. Abbildung 6 zeigt ein erfindungsgemäßes Edelmetallnetz, Abbildung 7 ein Edelmetallnetz als Einbettware entsprechend dem Stand der Technik. Deutlich sind die abstehenden Schlaufen des erfindungsgemäßen Edelmetallnetzes zu erkennen, während sie bei dem Edelmetallnetz als Einbettware entsprechend dem Stand der Technik fehlen.

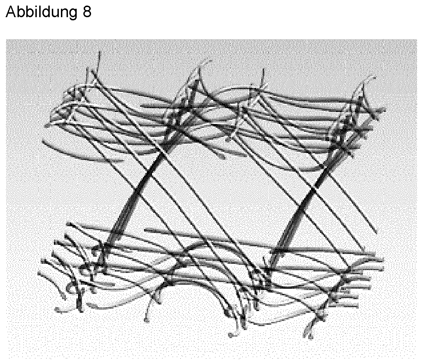

Abbildung 8 zeigt ein Edelmetallnetz als Zweibettware entsprechend dem Stand der Technik. Da in diesem Fall sowohl das auf dem vorderen als auch das auf dem hinteren Nadelbett gefertigte Gestrick vorhanden sind, sie hier ebenfalls keine abstehenden Schlaufen zu erkennen. Somit unterscheidet sich das erfindungsgemäße Edelmetallnetz auch deutlich von diesem Edelmetallnetz des Standes der Technik. Auch hier ist der Anteil an Edelmetalldraht, welcher nicht innerhalb der Edelmetallnetzebene verläuft, bei dem erfindungsgemäßen Edelmetallnetz deutlich größer als bei der Zweibettware entsprechend dem Stand der Technik.

Bei Verwendung eines löslichen Garns ist dieses bevorzugt in Wasser löslich. Wasser als Lösungsmittel ist organischen Lösungsmitteln sowohl aus Umweltschutz- als auch aus Arbeitssicherheitsgründen vorzuziehen.

Bevorzugt besteht der Edelmetalldraht aus einer Legierung umfassend Platin und Rhodium. Durch das Platin wird eine gute katalytische Aktivität für den Ammoniak-Umsatz erzielt, Rhodium verbessert die Selektivität zu NO und reduziert damit die Lachgas-Emissionen.

Der Polfaden oder die Polfäden und das auf dem hinteren (9) oder vorderen (8) Nadelbett hergestellte Gestrick aus Edelmetalldraht bestehen bevorzugt aus Edelmetalldraht der gleichen Zusammensetzung und des gleichen Durchmessers. Hierdurch wird die Komplexität der Fertigung reduziert.

In einer besonderen Ausführungsform wird für den Polfaden oder die Polfäden ein Edelmetalldraht mit größerem Durchmesser verwendet als für das auf dem hinteren (9) oder vorderen (8) Nadelbett hergestellte Gestrick. Hierdurch lässt sich die Lachgasbildung zusätzlich reduzieren, ohne den Edelmetallgehalt zu sehr zu erhöhen, da dickere Edelmetalldrähte die Selektivität zu NO erhöhen ("The Kinetics of Industrial Ammonia Combustion", Maximilian Warner, PhD-Thesis, Univ. of Sydney, 2013).

Ebenfalls umfasst die Erfindung ein Edelmetallnetz, welches nach dem erfindungsgemäßen Verfahren hergestellt ist und aus Edelmetalldrähten gestrickt ist, dadurch gekennzeichnet, dass das Gestrick von der Netzebene abstehende Schlaufen aufweist, die von einem Polfaden oder von Polfäden gebildet werden.

Die Erfindung umfaßt auch ein gestricktes Edelmetallnetz, welches von der Netzebene abstehende Schlaufen aufweist, die von dem Polfaden oder den Polfäden gebildet werden, und welche mindestens 1 mm und bevorzugt höchstens 5 mm über die Oberfläche der Maschen des Gestricks hinausragen und in einem Winkel von 45° bis 90° zu der Gestrickebene abstehen. Bevorzugt ragen die Schlaufen 1 bis 3 mm über die Oberfläche der Maschen des Gestricks hinaus.

Bevorzugt besteht der Edelmetalldraht oder die Edelmetalldrähte aus einer Platinlegierung mit mehr als 75 Gewichts-% Platin.

Weiterhin ist ein Verfahren zur katalytischen Oxidation von Ammoniak Bestandteil der Erfindung, welches die folgenden Schritte umfasst:
- Bereitstellen von einem oder mehreren erfindungsgemäßen Edelmetallnetzen
- Zusammenfassen der Edelmetallnetze zu einem Netzstapel (3)
- Einbau des Netzstapels (3) in einen Strömungsreaktor (1)
- Zuführung eines Gases (6) beinhaltend Ammoniak und Sauerstoff bei einer Temperatur im Strömungsreaktor (1) zwischen 500°C und 1300°C und einem Druck zwischen 0,1 MPa und 1,4 MPa, wobei das Ammoniak katalytisch mit dem Sauerstoff reagiert und NO erhalten wird (7), welches für die Salpetersäureherstellung verwendet werden kann.

In einer bevorzugten Ausführungsvariante werden im zweiten Schritt auch Getternetze und Trennnetze (5) in den Netzstapel (6) mit eingebaut.

Bevorzugt werden die Netze derart eingebaut, dass die von der Netzebene abstehenden Schlaufen, die von dem Polfaden oder den Polfäden gebildet werden, dem Gasstrom zugewandt sind, so dass das Reaktionsgas zu allererst auf die Polfäden trifft. Damit kann das Reaktionsgas auf der Oberfläche der Polfäden bereits reagieren, bevor es auf die Oberfläche des auf dem hinteren (9) oder vorderen (8) Nadelbett hergestellten Gestricks trifft, welches eine höhere Selektivität für die Oxidation von Ammoniak zu N₂O aufweist als die Schlaufen.

## Patentansprüche

1. Verfahren zur Herstellung von Edelmetallnetzen auf Flachstrickmaschinen, die Schritte enthaltend
a. Bereitstellen von Edelmetalldraht, Platin umfassend
b. Bereitstellen von brennbarem oder in Lösungsmittel löslichem Garn
c. Stricken von Zweibettware durch simultanes Stricken auf dem vorderen (8) und hinteren (9) Nadelbett
wobei
auf dem vorderen (8) oder auf dem hinteren (9) Nadelbett ein brennbares oder lösliches Garn verwendet wird, welches nach dem Strickvorgang abgeflammt oder aufgelöst wird,
**dadurch gekennzeichnet, dass** die beiden Gestricke durch verbindende Polfäden zusammengeführt werden und auf dem anderen Nadelbett und für die Polfäden ein Edelmetalldraht verwendet wird, so dass nach dem Abflammen oder Auflösen des brennbaren oder löslichen Garns nur der Polfaden oder die Polfäden und das auf dem hinteren (9) oder vorderen (8) Nadelbett hergestellte Gestrick aus Edelmetalldraht übrig bleiben, so dass das Gestrick von der Netzebene abstehende Schlaufen aufweist, die von dem Polfaden oder den Polfäden gebildet werden.

2. Verfahren nach Anspruch 1, **dadurch gekennzeichnet, dass** es sich bei dem in Lösungsmittel löslichem Garn um in Wasser lösliches Garn handelt.

3. Verfahren nach Anspruch 1 oder 2, **dadurch gekennzeichnet, dass** der Edelmetalldraht aus einer Legierung besteht, die Platin und Rhodium umfasst.

4. Verfahren nach einem oder mehreren der Ansprüche 1 bis 3, **dadurch gekennzeichnet, dass** der Polfaden oder die Polfäden und das auf dem hinteren (9) oder vorderen (8) Nadelbett hergestellte Gestrick aus Edelmetalldraht der gleichen Zusammensetzung und des gleichen Durchmessers bestehen

5. Verfahren nach einem oder mehreren der Ansprüche 1 bis 3, **dadurch gekennzeichnet, dass** der Polfaden oder die Polfäden einen größeren Drahtdurchmesser aufweist bzw. aufweisen als der Edelmetalldraht bzw. die Edelmetalldrähte des auf dem hinteren (9) oder vorderen (8) Nadelbett hergestellten Gestricks

6. Edelmetallnetz, **dadurch gekennzeichnet, dass** es nach einem Verfahren gemäß einem oder mehreren der Ansprüche 1 bis 5 hergestellt ist, und aus Edelmetalldrähten gestrickt ist,
**dadurch gekennzeichnet, dass**
das Gestrick von der Netzebene abstehende Schlaufen aufweist, die von einem Polfaden oder von Polfäden gebildet werden.

7. Edelmetallnetz nach Anspruch 6, bei dem die Schlaufen mindestens 1 mm über die Oberfläche der Maschen des Gestricks hinausragen und in einem Winkel von 45° bis 90° zu der Gestrickebene abstehen.

8. Edelmetallnetz nach Anspruch 6 oder 7,
**dadurch gekennzeichnet, dass** der Edelmetalldraht oder die Edelmetalldrähte des Edelmetallnetzes aus einer Platinlegierung mit mindestens 75% Platin bestehen.

9. Verfahren zur katalytischen Oxidation von Ammoniak, die Schritte enthaltend
a. Bereitstellen von Edelmetallnetzen gemäß Anspruch 6 bis 8
b. Zusammenfassen der Edelmetallnetze (4) zu einem Netzstapel (3)
c. Einbau des Netzstapels (3) in einen Strömungsreaktor (1)
d. Zuführung eines Gases (6) beinhaltend Ammoniak und Sauerstoff bei einer Temperatur im Strömungsreaktor (1) zwischen 500°C und 1300°C und einem Druck zwischen 0,1 MPa und 1,4 MPa

10. Verfahren nach Anspruch 9, **dadurch gekennzeichnet, dass** im Schritt b auch Getternetze und Trennnetze (5) für den Netzstapel (6) verwendet werden

11. Verfahren nach Anspruch 9 oder 10,
**dadurch gekennzeichnet, dass**
das erfindungsgemäße Edelmetallnetz oder die erfindungsgemäßen Edelmetallnetze derart eingebaut sind, dass die von der Netzebene abstehenden Schlaufen, die von dem Polfaden oder den Polfäden gebildet werden, dem Gasstrom des Reaktionsgases zugewandt sind.

## Claims

1. Method for producing noble metal nets on flat-bed knitting machines, involving the steps of
a. providing noble metal wire comprising platinum
b. providing yarn which is combustible or soluble in solvent
c. knitting two-bed articles by simultaneous knitting on the front (8) and rear (9) needle bed,
a combustible or soluble yarn being used on the front (8) or on the rear (9) needle bed, which yarn is burned off or dissolved after the knitting process,
**characterized in that** the two knitted fabrics are joined by connecting pile threads, and a noble metal wire is used on the other needle bed and for the pile threads, such that, after the combustible or soluble yarn has been burned off or dissolved, there remains only the pile thread or the pile threads and the knitted fabric made of noble metal wire and produced on the rear (9) or front (8) needle bed, so that the knitted fabric has loops protruding from the net plane, which loops are formed of the pile thread or the pile threads.

2. Method according to claim 1, **characterized in that** the yarn which is soluble in solvent is a water-soluble yarn.

3. Method according to claim 1 or 2, **characterized in that** the noble metal wire consists of an alloy comprising platinum and rhodium.

4. Method according to one or more of claims 1 to 3, **characterized in that** the pile thread or the pile threads and the knitted fabric produced on the rear (9) or front (8) needle bed consist of noble metal wire of the same composition and the same diameter.

5. Method according to one or more of claims 1 to 3, **characterized in that** the pile thread or the pile threads has or have a greater wire diameter than the noble metal wire or the noble metal wires of the knitted fabric produced on the rear (9) or front (8) needle bed.

6. Noble metal net, **characterized in that** it is produced by a method according to one or more of claims 1 to 5, and is knitted from noble metal wires,
**characterized in that**
the knitted fabric has loops protruding from the net plane, which loops are formed of a pile thread or pile threads.

7. Noble metal net according to claim 6, in which the loops project at least 1 mm beyond the surface of the meshes of the knitted fabric and protrude at an angle of 45° to 90° relative to the knitted plane.

8. Noble metal net according to claim 6 or 7, **characterized in that** the noble metal wire or the noble metal wires of the noble metal net consist of a platinum alloy having at least 75% platinum.

9. Method for the catalytic oxidation of ammonia, involving the steps of
a. providing noble metal nets according to claims 6 to 8
b. combining the noble metal nets (4) to form a net stack (3)
c. installing the net stack (3) in a flow reactor (1)
d. supplying a gas (6) containing ammonia and oxygen at a temperature in the flow reactor (1) between 500 °C and 1,300 °C and a pressure between 0.1 MPa and 1.4 MPa.

10. Method according to claim 9, **characterized in that**, in step b, getter nets and separating nets (5) are used for the net stack (6).

11. Method according to claim 9 or 10,
**characterized in that**
the noble metal net according to the invention or the noble metal nets according to the invention are installed in such a way that the loops protruding from the net plane, which are formed of the pile thread or the pile threads, face the gas flow of the reaction gas.

## Revendications

1. Procédé pour la fabrication de filets métalliques précieux sur machines à tricoter rectilignes, contenant les étapes de
a. fourniture de fil métallique précieux, comprenant du platine
b. fourniture de fil inflammable ou soluble dans un solvant
c. tricotage de produits à double fonture par le tricotage simultané sur la planche d'aiguilles avant (8) et arrière (9)
dans lequel
un fil inflammable ou soluble, qui est brûlé ou dissous après le processus de tricotage, est utilisé sur la planche d'aiguilles avant (8) ou arrière (9),
**caractérisé en ce que** les deux tricots sont rassemblés par des fils de poil d'assemblage et un fil métallique précieux est utilisé sur l'autre planche d'aiguilles et pour les fils de poil, de telle sorte qu'après le brûlage ou la dissolution du fil inflammable ou soluble, seuls le(s) fil(s) de poil et le tricot fabriqué sur la planche d'aiguille arrière (9) ou avant (8) en fil métallique précieux restent, de telle sorte que le tricot présente des boucles s'étendant à partir du plan du filet, qui sont formées par le(s) fil(s) de poil.

2. Procédé selon la revendication 1, **caractérisé en ce qu'**il s'agit, pour le fil soluble dans un solvant, d'un fil soluble dans l'eau.

3. Procédé selon la revendication 1 ou 2, **caractérisé en ce que** le fil métallique précieux est constitué d'un alliage qui comprend du platine et du rhodium.

4. Procédé selon l'une ou plusieurs des revendications 1 à 3,
**caractérisé en ce que** le(s) fil(s) de poil et le tricot fabriqué sur la planche d'aiguilles arrière (9) ou avant (8) sont constitués de fil métallique précieux de même composition et de même diamètre.

5. Procédé selon l'une ou plusieurs des revendications 1 à 3,
**caractérisé en ce que** le(s) fil(s) de poil présente(nt) un diamètre de fil supérieur à celui du/des fil(s) métallique précieux du tricot fabriqué sur la planche d'aiguilles arrière (9) ou avant (8).

6. Filet métallique précieux, **caractérisé en ce qu'**il est fabriqué selon un procédé selon l'une ou plusieurs des revendications 1 à 5 et tricoté en fils métallique précieux,
**caractérisé en ce que**
le tricot présente des boucles, formées d'un/de fil(s) de poil, qui s'étendent à partir du plan du filet.

7. Filet métallique précieux selon la revendication 6, dans lequel les boucles font saillie d'au moins 1 mm au-dessus de la surface des mailles du tricot et à un angle de 45° à 90° par rapport au plan du tricot.

8. Filet métallique précieux selon la revendication 6 ou 7,
**caractérisé en ce que** le(s) fil(s) métallique(s) précieux du filet métallique précieux est/sont constitué(s) d'un alliage de platine comportant au moins 75 % de platine.

9. Procédé pour l'oxydation catalytique d'ammoniac, contenant les étapes de
a. fourniture de filets en métal précieux selon la revendication 6 à 8
b. regroupement des filets métalliques précieux (4) en une pile (3) de filets
c. incorporation de la pile (3) de filets dans un réacteur à circulation (1)
d. introduction d'un gaz (6) comportant de l'ammoniac et de l'oxygène à une température dans le réacteur à circulation (1) entre 500 °C et 1300 °C et à une pression entre 0,1 MPa et 1,4 MPa.

10. Procédé selon la revendication 9, **caractérisé en ce que** des treillis et des filets de séparation (5) sont également utilisés pour la pile (6) de filets dans l'étape b.

11. Procédé selon la revendication 9 ou 10,
**caractérisé en ce que**
le(s) filet(s) métallique(s) précieux selon l'invention est/sont incorporé(s) de telle sorte que les boucles s'écartant à partir du plan du filet, formées par le(s) fil(s) de poil, sont orientées vers le flux gazeux du gaz de réaction.
